# EUROPEAN PATENT SPECIFICATION

(11) **EP 0 814 329 B1**
(45) Date of publication and mention of the grant of the patent: **26.05.2004**
(21) Application number: 97116804.2
(22) Date of filing: 11.03.1992
(51) Int. Cl.: G01L 5/00, B60T 8/00, G01L 5/20

(54) **Device for measuring vehicle wheel forces**
Vorrichtung zur Messung von Radkräften
Dispositif pour mesurer la force d'action sur une roue d'un vehicule

(30) Priority: 19.03.1991 JP 13084091
(43) Date of publication of application: 29.12.1997
(62) Divisional of application: 92104225.5
(73) Proprietor: JAPAN ELECTRONICS INDUSTRY, LTD., Ikuno-ku Osaka (JP)
(72) Inventor: Miyazaki, Nagao, Ikuno-ku, Osaka (JP)
(74) Representative: Popp, Eugen, Dr.

(56) References cited:
- EP-A- 0 154 728
- EP-A- 0 363 570
- PATENT ABSTRACTS OF JAPAN vol. 004, no. 031 (P-002), 18 March 1980 & JP 55 004547 A (TOYO BALDWIN:KK;OTHERS: 01), 14 January 1980,
- PATENT ABSTRACTS OF JAPAN vol. 010, no. 344 (P-518), 20 November 1986 & JP 61 145427 A (HITACHI CONSTR MACH CO LTD), 3 July 1986,
- PATENT ABSTRACTS OF JAPAN vol. 009, no. 182 (P-376), 27 July 1985 & JP 60 055237 A (YOUTAROU HATAMURA), 30 March 1985,
- PATENT ABSTRACTS OF JAPAN vol. 009, no. 030 (P-333), 8 February 1985 & JP 59 174726 A (KIYOUWA DENGIYOU:KK), 3 October 1984,

## Description

### BACKGROUND OF THE INVENTION

### I. Field of the Invention

The present invention relates to a device for measuring action force of a wheel for detecting road surface frictional force, vertical drag, road surface friction coefficient, etc. which can be a constituent element of a brake system with skid control for preventing lock (seizure) of the wheels of a vehicle on sudden stops or a traction control system for preventing excessive slip of the wheels at acceleration, and a device for measuring stress of a structure for measuring stresses produced in optional structures.

### II. Prior Art

The antilock brake system (ABS) of a conventional vehicle such as an automobile generally employs a principle of automatically controlling brake action, according to chassis speed and wheel speed, in such a manner that slip ratio falls into a certain range (cf. JP-B-59-30585 and JP-A-60-61354). The relationship between road surface friction coefficient and slip ratio is variable according to road surface conditions. Therefore, in the above-mentioned system, braking force may not be maximum depending on road surface conditions and a minimum braking distance cannot be obtained in such a case. Furthermore, since the chassis speed is estimated from the wheel speed, control of the slip ratio is deficient in precision. Exact determination of the chassis speed requires a complicated apparatus such as a ground-relative speed sensor (cf. JP-A-63-64861), a chassis deceleration sensor (cf. JP-A-63-170157) or the like.

There was accordingly proposed an ABS which takes into account road surface frictional force or road surface friction coefficient as a measured value. In the system described in JP-A-63-25169, the torque (tire torque) of the road surface frictional force acting on the wheels is obtained by operating the wheel angular acceleration speed and the brake fluid pressure. And the beginning of decline in the tire torque while the brake fluid pressure increases is adopted as one of the criteria for the assessment of wheel conditions just before the wheels are locked. However, in this system, the tire torque is indirectly determined by arithmetic operations of the wheel angular acceleration speed and the brake fluid pressure, and wheel inertia efficiency and the braking efficiency of a brake and so on are indefinite constants. Therefore, the precision of the calculated values is not sufficiently high.

Regarding a traction control system, the conventional apparatus also detects the wheel slip at the time of acceleration by measuring wheel speed like the ABS. In this case, too, there is the same problem as in the ABS wherein controls are executed based on wheel speed.

Therefore, constituent elements of these new ABS or traction control system, there is a demand for an apparatus for measuring dynamic quantities relating to the interaction between road surface and wheels such as road surface frictional force, vertical drag and road surface friction coefficient.

EP-A 0 154 728 relates to a load detector which is capable of maintaining sufficient degrees of detection sensitivity, strength and rigidness and which does not develop detection errors even if the points of action of loads changes from one another.

### SUMMARY OF THE INVENTION

An object of the present invention to meet the above-mentioned demand is to provide a device for measuring the action force of wheels for detecting road surface frictional force, vertical drag and road surface friction coefficient, and to provide a structure stress measuring apparatus for measuring the stresses generated in structures.

The present invention provides a wheel action force measuring apparatus comprising a stress detection sensor securely mounted in a hole provided in a vehicle axle and a signal processing circuit adapted to process the detection signals from the stress detection sensor.

According to such a device, the stress of the axle due to wheel action force is detected by the stress detection sensor. The stress is proportional to the wheel action force and, therefore, the stress detection sensor detects the wheel action force through the stress. Since the stress detection sensor is embedded in the axle, interferences to sensor output signals from wheel action forces other than target wheel action force can be decreased and, moreover, the sensor can be protected against the external environment. Furthermore, since the detection signal from the stress detection sensor is processed by the signal processing circuit, interferences from wheel action forces other than the specific wheel action force subjected to measurement can be further decreased.

According to the above-mentioned device for measuring the action force of a wheel, the hole in the axle can be disposed in alignment with the stress neutral line of the axle. According to such an alignment, the interferences to the sensor output signals from the brake torque, side force, etc. acting on the wheel can be effectively decreased.

In the above-mentioned device for measuring action force of a wheel, the stress detection sensor can be disposed on the centerline of the axle, whereby the interferences to the sensor output signal from the brake torque, side force, etc. acting on the wheel can be decreased.

Furthermore, the present invention provides a device for measuring action force of a wheel comprising a plurality of stress detection sensors independently securely embedded in a plurality of holes in a vehicle axle and a signal processing circuit adapted to process detection signals from each of the stress detection sensors to extract a specified stress. According to the above-mentioned arrangement, a specific action force among various wheel action forces such as road surface frictional force, vertical drag, brake torque, side force, etc. can be measured, with influences of the other action forces being decreased.

According to any of the above-mentioned wheel action measuring apparatuses, the detection sensor and the signal processing circuit can be securely installed together in the hole of the axle. Therefore, a high signal-to-noise ratio can be achieved in the output signal from the signal processing circuit.

Furthermore, the present invention provides a device for measuring action force of a wheel comprising stress detection sensors securely installed in each of the holes formed in horizontal and vertical directions in the axle and a signal processing circuit adapted to process a detection signal from each of the stress detection sensors. In this arrangement, road surface frictional force and vertical drag acting on a wheel can be measured by the stress detection sensors and the detection signal from each of the stress detection sensors can be processed in the signal processing circuit to measure road surface friction coefficient which is defined as the ratio of road surface frictional force and vertical drag.

In any of the above-mentioned devices for measuring action force of a wheel, the stress detection sensor can be constructed as an integral unit'comprising strain gauges mounted on a cubic plastic base. In this arrangement, the stress detection sensors can measure road surface frictional force and vertical drag acting on a wheel at generally the same position in the axle. Thus, the stress detection sensors can be installed in a position in the axle where interferences to two measured values from wheel action forces other than those wheel action forces can be simultaneously decreased.

In any of the devices for measuring action force of a wheel as mentioned above, the stress detection sensor can be constructed as an integral unit comprising strain gauges mounted on a planner part provided at one end of a bar-shaped structure. In this arrangement, the stress detection sensor can be easily embedded in a predetermined position and in a predetermined orientation in the hole.

In any of the above-mentioned devices for measuring action force of a wheel, the stress detection sensor can be constructed as an integral unit which has strain gauges mounted on a ceramic substrate and is covered up with an oxide film. In this arrangement, a highly heat-resistant stress detection sensor can be constituted.

In any of the devices for measuring action force of a wheel as mentioned above, the strain gauges of each of the stress detection sensors can be securely mounted in the hole of the axle in an orientation of about 45 degrees with respect to the horizontal and vertical stress center axes of the axle. Therefore, the respective sensors can measure road surface frictional force and vertical drag acting on the wheel, with interferences from other wheel action forces being decreased.

Furthermore, the present invention provides a device for measuring action force of a wheel comprising an auxiliary stress detection sensor for detecting brake torque etc., of which auxiliary stress detection sensor disposed in the vicinity of a main stress sensor in the hole formed in the vehicle axle, and the signal processing circuit for processing stress detection signal from these sensors, thereby eliminating or decreasing brake torque and other strain signals.

The present invention further provides a device for measuring stress of a structure comprising a stress detection sensor securely mounted in a hole formed in a structure to be measured the stress thereof and a signal processing circuit for processing the detection signals from the stress detection sensor. Because of this arrangement, stresses in any desired position including the interior of the structure can be measured.

In any of the devices for measuring action force of a wheel as mentioned above, the signal processing circuit can be constituted of a sensor bridge circuit for stress detection and an amplification circuit. In this arrangement, interferences from wheel action forces other than a specific wheel action force can be effectively eliminated and, in addition, the sensitivity of the stress detection sensor be increased so that a sufficiently large output of the measured wheel action force can be obtained.

In any of the devices for measuring action force of a wheel as mentioned above, the signal processing circuit can consist of a sensor bridge circuit for stress detection, an amplification circuit and an operational circuit. In this arrangement, interferences from wheel action forces other than a specific wheel action force can be effectively eliminated and the sensitivity of the stress detection sensor be increased, with the result that it is not only possible to obtain a measured value of the desired wheel action force as a sufficiently large output but also possible to determine road surface friction coefficient which is defined as the ratio of road surface frictional force and vertical drag.

In any of the wheel action measuring devices as mentioned above, the signal processing circuit can consist of a sensor bridge circuit for stress detection.

The effects of the present invention are as follows.

According to the device of the present invention, road surface frictional force, vertical drag, road surface friction coefficient, side force, brake torque, drive torque, etc can be easily measured. When the device is utilized in an antilock brake system, the braking distance can be reduced as much as possible regardless of road surface conditions and, at the same time, the object of antilock can be accomplished. Moreover, there is no need for a complicated apparatus for measuring the chassis speed. In a traction control device, the acceleration distance can be reduced as mush as possible regardless of road surface conditions. Thus, the present invention brings forth remarkable improvements in the performance of a vehicle antilock brake system and a traction control device.

Furthermore, according to the device of the present invention, the stress of a structure can be easily measured. In addition, any load, torque or the like can be also expediently measured.

In accordance with the present invention, the technology for measuring stresses, loads or the like by means of a stress detection sensor with strain gauges embedded in an optional structure offers such effects that. by positioning the stress detection sensor in a suitable orientation in a hole according to a target stress or load. any desired stress, load or the like can be measured. Moreover, by placing a plurality of stress detection sensors in suitable positions and orientations, overlapping stresses or loads can be eliminated or decreased and the necessary stress or load be extracted and measured. Furthermore, this stress measuring device has an additional advantage that the stresses generated internally in an object structure can be easily measured.

The present invention is defined by claims 1 to 14 and relate to a device for measuring the force acting on a vehicle wheel mounted on a vehicle axle, said device comprising: a stress detection sensor having a base with strain gauges arranged thereon, the sensor being disposed in a hole provided in a vehicle axle, a signal processing circuit adapted to process a detection signal from said stress detection sensor. The stress detection sensor is installed and secured in the hole through a spacer means, the spacer means being a material which fills all space between the stress detection sensor and walls of the hole.

### BRIEF DESCRIPTION OF THE DRAWINGS

Fig. 1 is a partial perspective view showing an embodiment of a device for measuring action force of a wheel according to the present invention.

Fig. 2 is a partial perspective view showing an embodiment of a stress detection sensor of a device for measuring action force of a wheel according to the present invention.

Fig. 3 is a diagrammatic view showing an embodiment of a signal processing circuit of a device for measuring action force of a wheel according to the present invention.

Fig. 4 is a partial perspective view showing another embodiment of a stress detection sensor of a device for measuring action force of a wheel according to the present invention.

Fig. 5 is a diagrammatic view showing another embodiment of a signal processing circuit of a device for measuring action force of a wheel according to the present invention.

Fig. 6 is a partial perspective view showing still another embodiment of a stress detection sensor of a device for measuring action force of a wheel according to the present invention.

Fig. 7 is a partial perspective view showing a stress detection sensor consisting of another embodiment of a device for measuring action force of a wheel.

Fig. 8 is a partial perspective view showing another embodiment of a stress detection sensor consisting of still another embodiment of a device for measuring action force of a wheel.

Fig. 9 is a perspective interior view showing an embodiment wherein a plurality of stress detection sensors are employed in a device for measuring road surface frictional force and brake torque or drive torque as wheel action forces.

Fig. 10 is a perspective interior view showing an embodiment wherein a signal processing circuit and a stress detection sensor are securely mounted in the same hole according to a device for measuring road surface frictional force as a wheel action force.

Fig. 11 is a perspective interior view showing an embodiment wherein a signal processing circuit and a stress detection sensor are securely mounted in a same horizontal hole according to a device for measuring road surface frictional force as a wheel action force.

Fig. 12 is a perspective interior view showing an embodiment wherein a plurality of stress detection sensors and a signal processing circuit are securely mounted in a same hole according to a device for measuring road surface frictional force and brake torque or drive torque as wheel action forces.

Fig. 13 is a perspective interior view showing an embodiment of a stress detection sensor of a device for measuring brake torque or drive torque as a wheel action force.

Fig. 14 is a partial perspective view showing an embodiment of a hole for supporting a stress detection sensor of a device for measuring action force of a wheel according to the present invention.

Fig. 15 is a perspective view showing another embodiment of a stress detection sensor equipped with strain gauges.

### PREFERRED EMBODIMENTS OF THE INVENTION

The followings are preferred embodiments of the present invention and should by no means be construed as limiting the scope of the invention as defined in the claims.

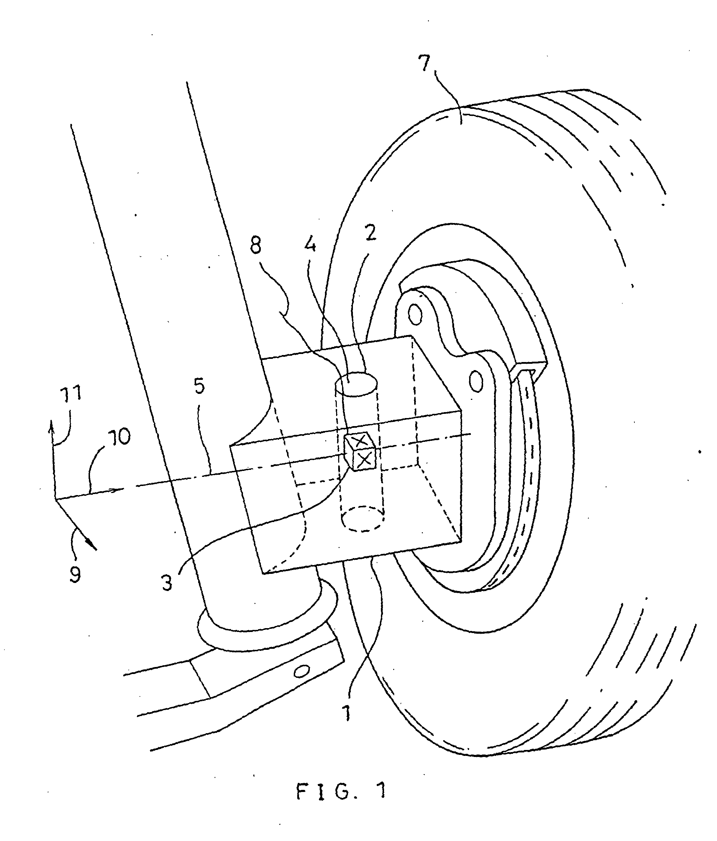

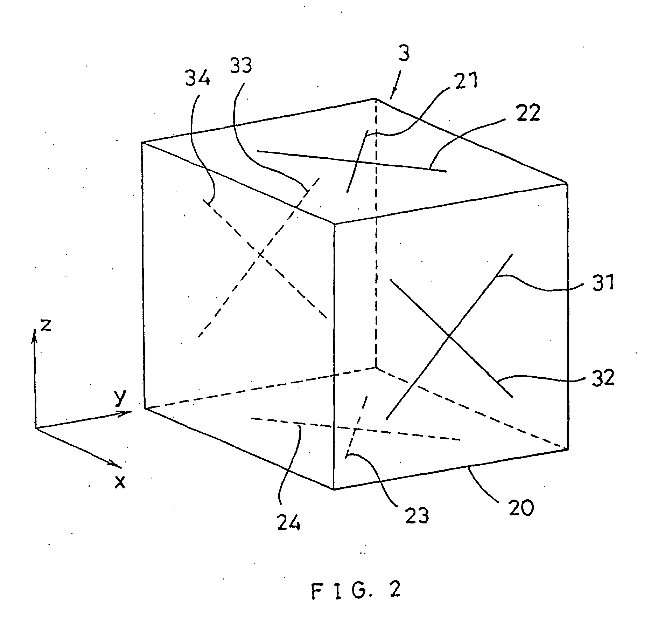

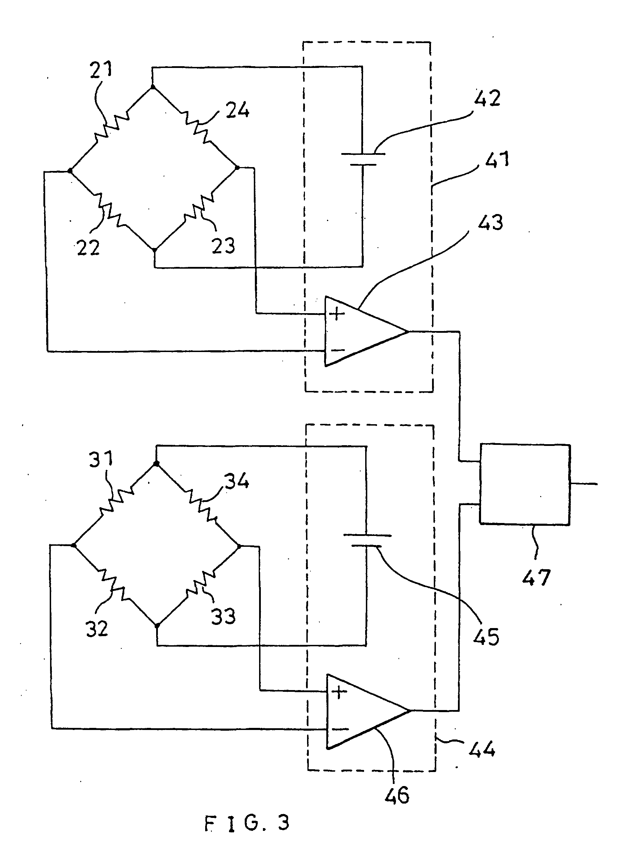

Embodiments of a device for measuring action force of a wheel for determining road surface friction coefficient are shown in Figs. 1, 2 and 3. Fig. 1 shows installation state of a stress detection sensor. Fig. 2 shows the stress detection sensor and Fig. 3 shows a signal processing circuit. As an example, there is shown a case in which the stress detection sensor is mounted in an axle of a driven wheel of a car having strut type suspension structure which is often used for automobiles. From the top to bottom of an axle 1 (a knuckle in this example), a hole 2 is formed along a direction 11 perpendicular to a road surface and intersecting an axle centerline (a stress neutral line) of the axle. The diameter of the hole 2 may, for example, be about 5 mm to about 10 mm. Here, the axle centerline (a stress neutral line) means the centerline of bending deformation generated in the axle 1 by road surface frictional force, vertical drag and side force acting on the wheel rotating about a spindle (the line on which neither tensile strain nor compressive strain occurs due to bending deformation), or the centerline of torsional deformation which is generated in the axle 1 by brake torque on actuation of a brake (the line on which no shear strain is generated by torsional deformation). These centerlines approximately coincide with the centerline of a spindle (a center axis 5 of the axle). A stress detection sensor 3 is inserted into the hole 2. As shown in Fig. 2, the stress detection sensor 3 comprises a cubic base 2 and strain measuring means mounted thereon. The strain measuring means may, for example, be strain gauges. As illustrated, strain gauges 21-24 and 31-34 are represented by lines on respective planes of the base 20. The base 20 may for example be made of a plastic material such as epoxy resin. The strain gauges 21-24 and 31-34 are attached to the base 20 by bonding to the respective surfaces of the base 20 with an adhesive or being embedded in the surface regions of the base 20. Each of the strain gauges 21-24 and 31-34 is preferably mounted at an angle of 45 degrees with respect to Y-axis. The stress detection sensor 3 is inserted into the hole 2 and installed on the axle centerline (the center axis 5 of the axle). X, Y and Z axes are established in coincidence with the direction of advance of the vehicle 9, the direction of an axle 10 and a vertical direction 11, respectively. A top surface of the stress detection sensor (one side whose normal direction is Z direction) is preferably above the centerline of the axle, a bottom surface of the sensor (another side whose normal direction is Z direction) is preferably below the centerline of the axle. The magnitude of the tensile or the compressive strain due to the bending deformation generated by the road surface frictional force, vertical drag and side force acting on the wheel is preferably the same on the two surfaces of the stress detection sensor or the magnitude of shear strain associated with torsional deformation generated by brake torque on actuation of the brake is preferably the same on both surfaces. This is of increased significance when the distance between the top and bottom surfaces is large. It is also preferable that a front surface (one side whose normal direction is X direction) and a rear surface (another side whose normal direction is X direction) of the stress detection sensor be disposed on each side of the axle centerline respectively and the strain due to bending deflection or torsional deformation be the same on both surfaces. The hole 2 is then filled up with a filler 4 (an example of spacer means). The filler 4 is preferably of the same material as the stress detection sensor 3. The filler 4 fills up the gap around the stress detection sensor 3 in order to securely lock the sensor in the hole 2. By the above-mentioned procedure, the strain gauges 21-24 and 31-34 are embedded securely in the predetermined position and in the predetermined orientation in the hole 2.

Like a signal processing circuit shown in Fig. 3, the set of strain gauges 21, 22, 23 and 24 and the set of 31, 32, 33 and 34, of the strain detection sensor 3, are respectively connected into a bridge and these bridges are electrically connected to an amplification circuit 41 consisting of a direct current source 42 and an amplifier 43 and an amplification circuit 44 consisting of a direct current source 45 and an amplifier 46, respectively, through an electric signal line 8. In response to the road surface frictional force acting on the wheel, shear strain is generated in the planes of the top and bottom surfaces of the stress detection sensors. The strain gauges 21-24 detect this shear strain. The amplification circuit 41 outputs a voltage signal proportional to this shear strain, that is to say the road surface frictional force. Partly because the strain gauges 21-24 form a bridge and partly because the shear strain is detected in the neighborhood of the axle centerline, the output signal cross-talks due to bending deformation and torsional deformation can be held to minimum. In this manner, a device for measuring action force of a wheel capable of measuring road surface frictional force with high precision can be implemented. Similarly, shear stress is generated in the planes of the front and rear sides of the stress detection sensor in response to the vertical drag acting on the wheel. The strain gauges 31-34 detect this shear strain. The amplification circuit 44 outputs a voltage signal proportional to this shear stress, that is to say vertical drag. Partly because the strain gauges 31-34 form a bridge and partly because the shear strain is detected in the neighborhood of the axle centerline, the output signal cross-talk due to bending deformation and torsional deformation can be minimized. In this manner, a device for measuring action force of a wheel capable of measuring vertical drag with high precision is implemented. Road surface friction coefficient can be determined by inputting output signals from the amplification circuits 41 and 44 to an operational circuit 47. In the operational circuit 47 road surface frictional force value is divided by vertical drag value to obtain road surface friction coefficient.

In this embodiment, since the gap around the stress detection sensor 3 in the hole 2 is filled up with synthetic resin, e.g. epoxy resin, or other spacer means, an additional advantage is realized such that the strain gauges 21-24 and 31-34 are protected against the external environment.

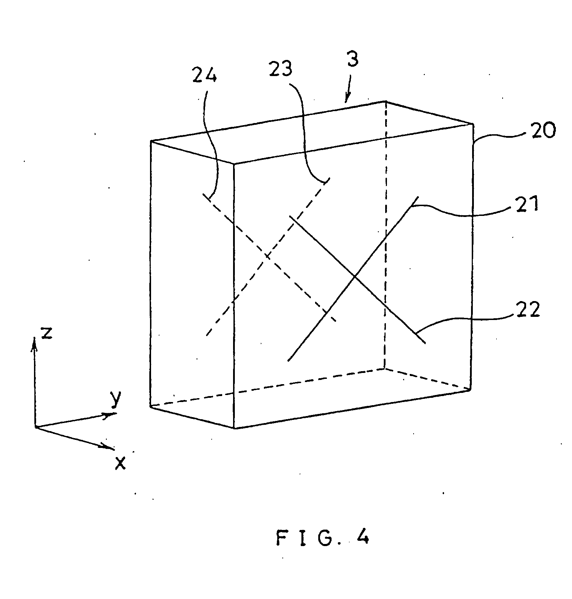

In order to measure either road surface frictional force or vertical drag, the stress detection sensor 3 illustrated in Fig. 4 can be employed in lieu of the stress detection sensor 3 of Fig. 2. Thus, each of the strain gauges 21-24 is preferably installed at an angle of 45 degrees with respect to Y-axis.

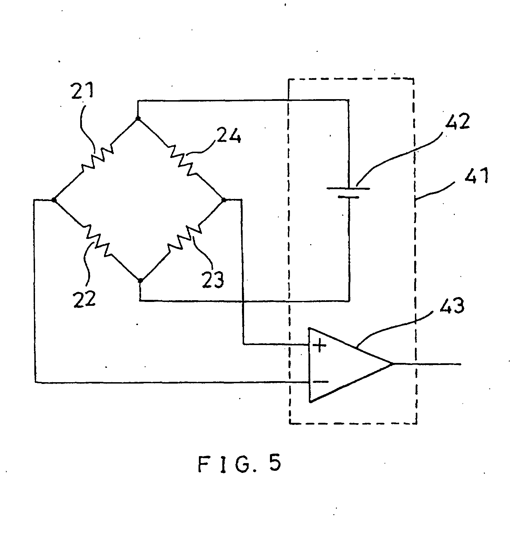

For the purpose of measuring road surface frictional force, the X, Y and Z axes in Fig. 4 are preferably coincident with a vertical direction 11, a direction of wheel advance 9 and an axle direction 10, respectively. For the purpose of measuring vertical drag, the X, Y and Z axes in Fig. 4 are preferably coincident with the direction of wheel advance 9, the axle direction 10 and the vertical direction 11. The relationship of the sensor installation position to the axle centerline is the same as the stress detection sensor shown in Fig. 2. The strain gauges 21-24 are connected to the signal processing circuit shown in Fig. 5. Thus, they are formed into a bridge which, in turn, is connected to an amplification circuit 41. This amplification circuit 41 outputs a signal corresponding to road surface frictional force or vertical drag.

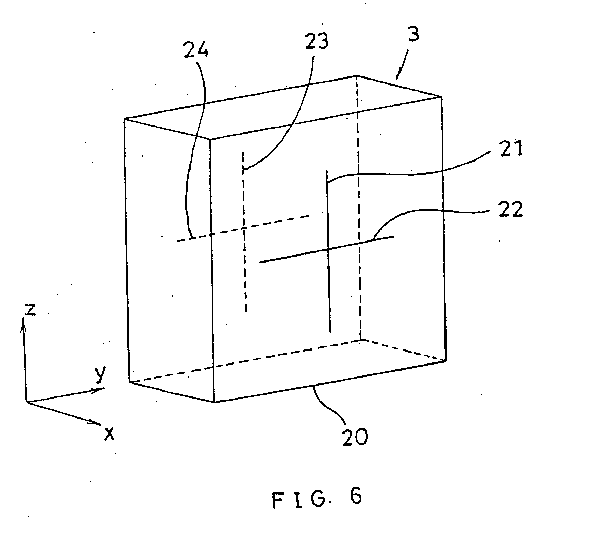

For the purpose of measuring side forces as a wheel action force, a stress detection sensor illustrated in Fig. 6 is employed and the respective strain gauges 21-24 are provided so as to be oriented along Y-axis or Z-axis as illustrated. Here, the axes X, Y and Z coincide with a direction of wheel advance 9, an axle direction 10 and a vertical direction 11 respectively, and the signal processing circuit is connected in the same manner as shown in Fig. 5. In this manner, a device for measuring action force of a wheel for detecting side force acting on the wheel can be implemented.

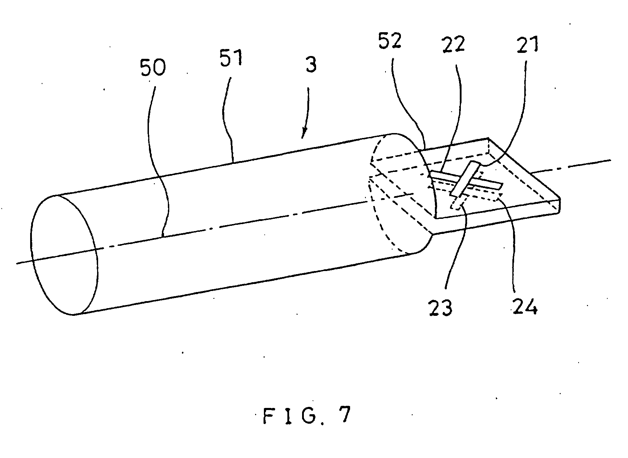

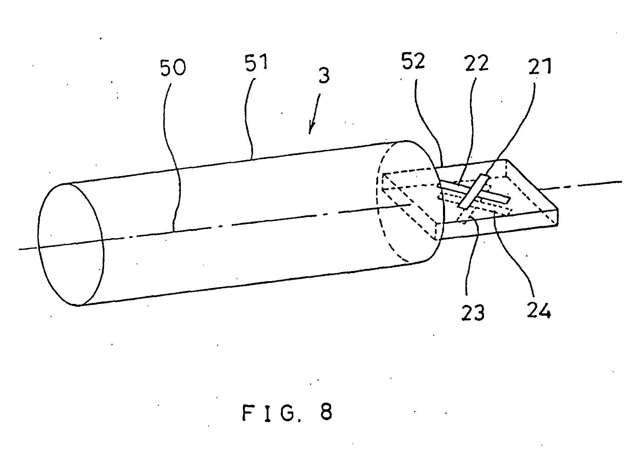

Other embodiments of a stress detection sensor are shown in Figs. 7 and 8. In these embodiments, the stress detection sensor comprises strain measuring gauges 21-24 attached to a planner part 52 provided at one end of a bar-shaped structure 51. Here, too, resistance strain gauges are used as the strain measuring gauges. The bar-shaped structure 51 may be made of a plastic material or of the same material as the axle 1 in which the sensor is embedded. The strain gauges 21, 22, 23 , and 24 are installed with their respective axes making an angle of 45 degrees with respect to a center axis 50 and fixedly mounted in the hole 2 formed in the axle 1. Thus, it can be mounted by tapping, adhesion, brazing, welding, shrinkage fitting or the like. Because of the bar-shaped structure, there is an advantage that the strain gauges can be easily set in predetermined positions and in predetermined orientations when the stress detection sensor 3 is installed and locked in the hole 2.

Particularly, in the case shown in Fig. 8, the width of the planner part 52 is smaller than the diameter of the bar-shaped structure 51. For this reason, in installing and locking the stress detection sensor 3 in the hole 2, the occurrence of twisting or other deformation and consequent excessive straining or damage of the planner part 52 due to rotation or the like can be effectively prevented.

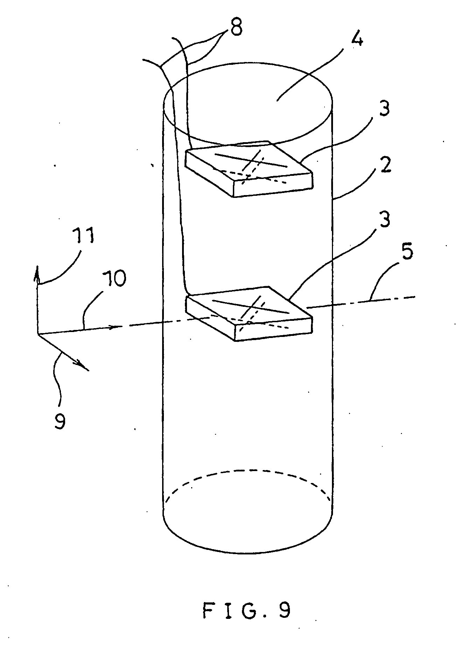

Fig. 9 is an enlarged diagrammatic view showing the hole 2 formed in the axle. In this embodiment, two stress detection sensors 3 shown in Fig. 4 are employed. X, Y and Z axes are established in coincidence with a vertical direction 11, a direction of wheel advance 9 and an axle direction 10, respectively. The sets of strain gauges of 21-24 and 21-24 of each stress detection sensor 3 are connected in the same manner as in the signal processing circuit shown in Fig. 3, whereby road surface frictional force and either drive torque acting on the wheel or brake torque when the brake system is actuated can be outputted. Using the output signals from two amplification circuits 41 and 44, an operational circuit 47 can give road surface frictional force by addition and torque by subtraction. In this embodiment, one of the stress detection sensors 3 is set on the center axis 5 of the axle but the same result is obtained when both sensors are offset from the center axis 5.

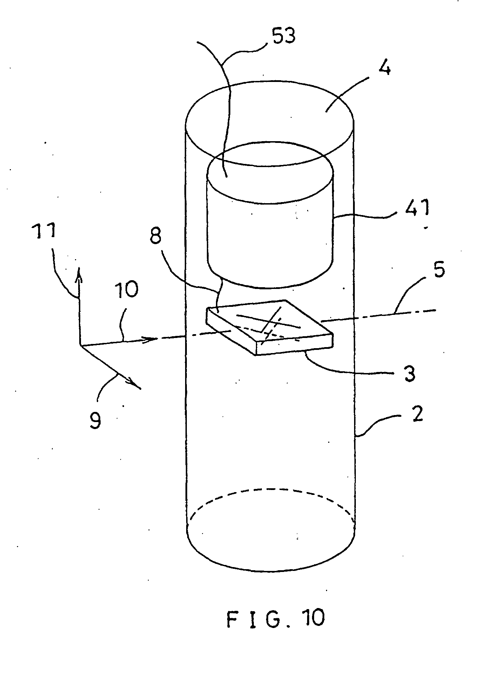

Fig. 10 is an embodiment for measuring road surface frictional force, wherein an amplification circuit 41 and a stress detection sensor 3 are securely mounted together in a hole 2. Installation of the amplification circuit 41 in the hole 2 can be effected in the contemporary circuit integration technology. By disposing the amplification circuit 41 in close proximity to the stress detection sensor 3, a noise-lean output signal can be made available on the signal line 53.

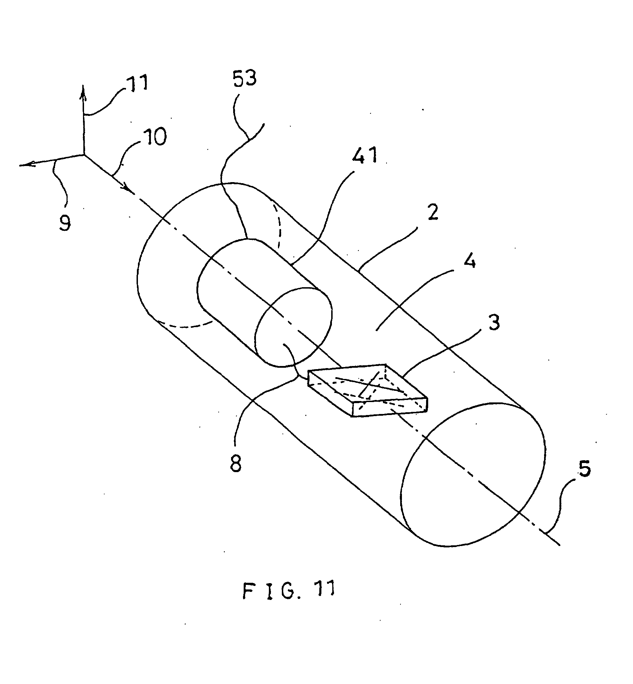

Fig. 11 shows an embodiment for measuring road surface frictional force with a system wherein the axle is formed with a horizontal hole and the amplification circuit 41 and the stress detection sensor 3 are provided together in the hole, just as in the embodiment shown in Fig. 10.

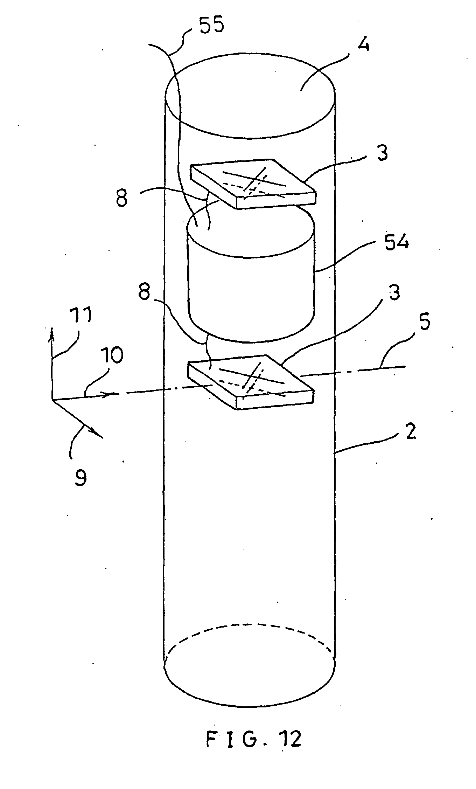

Fig 12 shows an embodiment of a device for measuring road surface frictional force and either drive torque or brake torque, all of which act on the wheel, by means of two stress detection sensors 3, wherein a signal processing circuit 54 comprising amplification circuits 41 and 44 and an operational circuit 47 is installed together with the stress detection sensor 3 in the hole. The numeral 55 indicates an output signal line of the signal processing circuit 54.

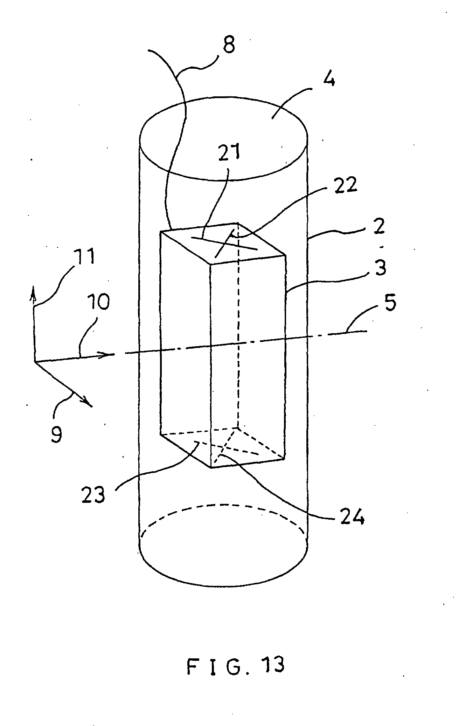

Fig. 13 shows an embodiment of measuring brake torque or drive torque with a single stress detection sensor 3. The strain gauges 21, 22, 23 and 24 are connected in the same manner as shown in Fig. 5 except that 22 and 23 are exchanged, viz. in the order of 21, 23, 22 and 24, whereby a device for measuring the above-mentioned torque is implemented.

Shown in Fig. 1 is an embodiment in which the hole 2 for accepting the stress detection sensor 3 is formed along the vertical direction 11. However, the orientation of the hole 2 is optional, of course. For example, the hole 2 can be formed in the horizontal direction, e.g. along the direction of advance 9 of the wheel. Figs. 1 and 9 - 13 show an embodiments wherein the stress detection sensor 3 is fixedly embedded in the hole 2 by means of the filler 4.

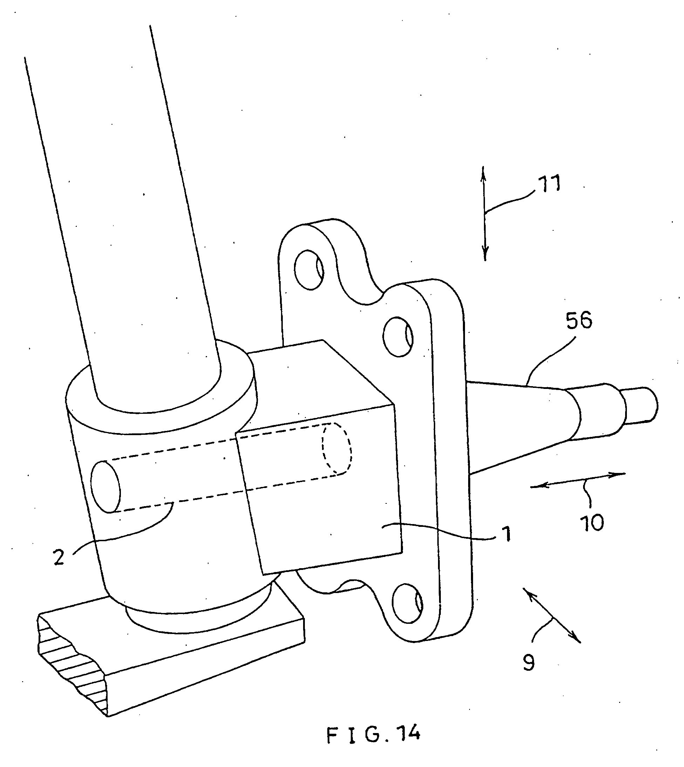

Fig. 14 shows an embodiment in which the hole 2 is provided in the axle direction 10. Moreover, the position of the hole is not limited to the position of the knuckle but may be a leading position of the axle, that is to say at the spindle 56. The embodiment illustrated in Fig. 14 is advantageous in that simply by installing the same type stress detection sensor as that shown in Fig. 7 or 8 in the altered orientation, it can serve not only as a device for measuring road surface frictional force but also as a device for measuring vertical drag.

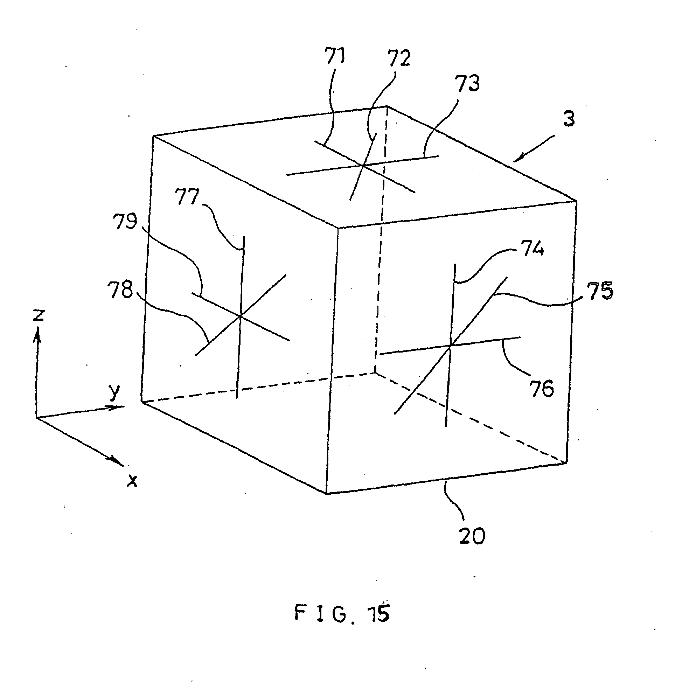

In the device for measuring action force of a wheel illustrated in Fig. 1, the stress detection sensor 3 illustrated in Fig. 15 can be employed. By utilizing the known technique employing a rosette gauge, stress generated in the knuckle in correspondence with road surface frictional force, vertical drag and other wheel action forces can be measured. In other words, any desired wheel action forces can be measured.

## Claims

1. The device for measuring the force acting on a vehicle wheel mounted on a vehicle axle (1), said device comprising:
a stress detection sensor (3) having a base (20) with strain gauges (21, 22; 23, 24) arranged thereon, the sensor (3) being disposed in a hole (2) provided in a vehicle axle (1),
a signal processing circuit (41, 44) adapted to process a detection signal from said stress detection sensor (3)
**characterized in that**
said stress detection sensor (3) is installed and secured in said hole (2) through a spacer means (4), the spacer means (4) being a material which fills all space between said stress detection sensor (3) and walls of said hole (2).

2. The device of Claim 1, wherein the material of said spacer means (4) is the same material as the sensor base (20) of said stress detection sensor (3).

3. The device of Claim 1 or 2, wherein said hole (2) is disposed with respect to a stress neutral line (10) of said axle (1) so as to encompass at least a portion of said stress neutral line (10).

4. The device of Claim 1, 2 or 3, wherein said stress detection sensor (3) is mounted in said hole (2) such that at least two of said strain gauges (21, 22; 23, 24) lie on opposite sides of said stress neutral line (10).

5. The device of any one of the Claims 1 to 4, wherein said hole (2) is disposed perpendicular to said stress neutral line (10) of said axle (1).

6. The device of any one of the Claims 1 to 4, wherein said stress detection sensor (3) comprises a plastic cube (2) as said base (20) and strain gauges (71, 72, 73; 74, 75, 76; 77, 78, 79) are mounted on three surfaces of the cube (2), each one surface being perpendicular to the other two.

7. The device of any one of the Claims 1 to 6, wherein said stress detection sensor(s) (3) and said signal processing circuit (41, 44) are installed and secured by said spacer means (4) in the same hole (2) formed in said axle (1).

8. The device of Claim 7, wherein said stress detection sensor (3) is an integral unit comprising strain gauges (21, 22, 23, 24, 31, 32, 33, 34) mounted on surfaces of a cubic plastic base (20).

9. The device of Claim 7, wherein said stress detection sensor (3) comprises strain gauges (21, 22, 23, 24) mounted on a ceramic substrate and being coated with an oxide film.

10. The device of any one of the Claims 1, 2, 3, 4 or 7, wherein said stress detection sensor (3) is an integral unit comprising strain gauges (21, 22, 23, 24) mounted on a planner element (52) extending from one end of a bar-shaped structure (51).

11. The device of any one of the Claims 1 to 10, wherein said strain gauges (21, 22, 23, 24) of said stress detection sensor (3) are arranged in said hole (2) in said axle (1) in an orientation of about 45 degrees with respect to horizontal stress center axis and a vertical stress center axis of a vehicle.

12. The device of any one of the Claims 1 to 10, wherein an auxiliary stress detection sensor (3) for detecting brake torque is installed near a main stress detection sensor (3), and corresponding stress detection signals are processed in said signal processing circuit (41, 44) to eliminate or decrease strain signals corresponding to the brake torque.

13. The device of any one of the Claims 1 to 12, wherein said signal processing circuit consists of bridge circuits of said stress detection sensor (3) and an amplification circuit (41,44).

14. The device of Claim 13, wherein said signal processing circuit further comprises an operational circuit (47).

## Patentansprüche

1. Vorrichtung zum Messen der Kraft die auf ein Fahrzeugrad wirkt, das an einer Fahrzeugachse (1) angebracht ist, wobei die Vorrichtung folgendes aufweist:
einen Spannungsdetektiersensor (3), der eine Basis (20) hat, an der Dehnungsmesser (21, 22; 23, 24) angeordnet sind, wobei der Sensor (3) in einem Loch (2) angeordnet ist, das in einer Fahrzeugachse (1) vorgesehen ist,
eine Signalverarbeitungsschaltung (41, 44), die so ausgebildet ist, daß sie ein Detektiersignal von dem Spannungsdetektiersensor (3) verarbeitet,
**dadurch gekennzeichnet, daß**
der Spannungsdetektiersensor (3) in dem Loch (2) durch eine Abstandseinrichtung (4) installiert und befestigt ist, wobei die Abstandseinrichtung (4) ein Material ist, das den gesamten Raum zwischen dem Spannungsdetektiersensor (3) und den Wänden des Lochs (2) ausfüllt.

2. Vorrichtung nach Anspruch 1, wobei das Material der Abstandseinrichtung (4) das gleiche Material ist wie die Sensorbasis (20) des Spannungsdetektiersensors (3).

3. Vorrichtung nach Anspruch 1 oder 2, wobei das Loch (2) in bezug auf eine Spannungs-Nullinie (10) der Achse (1) so angeordnet ist, daß es mindestens einen Bereich der Spannungs-Nullinie (10) einschließt.

4. Vorrichtung nach Anspruch 1, 2 oder 3, wobei der Spannungsdetektiersensor (3) in dem Loch (2) so angebracht ist, daß mindestens zwei von den Dehnungsmessern (21, 22; 23, 24) an gegenüberliegenden Seiten der Spannungs-Nullinie (10) liegen,

5. Vorrichtung nach einem der Ansprüche 1 bis 4, wobei das Loch (2) senkrecht zu der Spannungs-Nullinie (10) der Achse (1) angeordnet ist.

6. Vorrichtung nach einem der Ansprüche 1 bis 4, wobei der Spannungsdetektiersensor (3) einen Kunststoffkubus (2) als die Basis (20) aufweist und die Dehnungsmesser (71, 72, 73; 74, 75, 76; 77, 78, 79) an drei Oberflächen des Kubus (2) angebracht sind, wobei jede einzelne Oberfläche zu den beiden anderen senkrecht ist.

7. Vorrichtung nach einem der Ansprüche 1 bis 6, wobei der (die) Spannungsdetektiersensor(en) (3) und die Signalverarbeitungsschaltung (41, 44) durch die Abstandseinrichtung (4) in dem gleichen Loch (2), das in der Achse (1) ausgebildet ist, installiert und befestigt sind.

8. Vorrichtung nach Anspruch 7, wobei der Spannungsdetektiersensor (3) eine integrale Einheit ist, die Dehnungsmesser (21, 22, 23, 24, 31, 32, 33, 34) aufweist, die an Oberflächen einer kubischen Kunststoffbasis (20) angebracht sind.

9. Vorrichtung nach Anspruch 7, wobei der Spannungsdetektiersensor (3) Dehnungsmesser (21, 22, 23, 24) aufweist, die an einem Keramiksubstrat angebracht und mit einer Oxidschicht beschichtet sind.

10. Vorrichtung nach einem der Ansprüche 1, 2, 3, 4 oder 7, wobei der Spannungsdetektiersensor (3) eine integrale Einheit ist, die Dehnungsmesser (21, 22, 23, 24) aufweist, die an einem planaren Element (52) angebracht sind, das sich von einem Ende einer stabförmigen Konstruktion (51) erstreckt.

11. Vorrichtung nach einem der Ansprüche 1 bis 10, wobei die Dehnungsmesser (21, 22, 3, 24) des Spannungsdetektiersensors (3) in dem Loch (2) in der Achse (1) in einer Orientierung von ungefähr 45° in bezug auf eine horizontale Spannungsmittelachse und eine vertikale Spannungsmittelachse eines Fahrzeugs angeordnet sind.

12. Vorrichtung nach einem der Ansprüche 1 bis 10, wobei ein zusätzlicher Spannungsdetektiersensor (3) zum Detektieren eines Bremsdrehmoments nahe einem Haupt-Spannungsdetektiersensor (3) installiert ist, und entsprechende Spannungsdetektiersignale in der Signalverarbeitungsschaltung (41, 44) verarbeitet werden, um Dehnungssignale, die dem Bremsdrehmoment entsprechen, zu eliminieren oder zu verringern.

13. Vorrichtung nach einem der Ansprüche 1 bis 12, wobei die Signalverarbeitungsschaltung aus Brückenschaltungen des Spannungsdetektiersensors (3) und einer Verstärkungsschaltung (41, 44) besteht.

14. Vorrichtung nach Anspruch 13, wobei die Signalverarbeitungsschaltung ferner eine Operationsschaltung (47) aufweist.

## Revendications

1. Dispositif pour mesurer la force d'action sur une roue d'un véhicule monté sur un essieu du véhicule (1), ledit dispositif comprenant :
un capteur de détection de contrainte (3) possédant une base (20) munie de jauges de déformation (21, 22 ; 23, 24) agencées dessus, le capteur (3) étant disposé dans un orifice (2) prévu dans un essieu du véhicule (1),
un circuit de traitement de signal (41, 44) adapté pour traiter un signal de détection issu dudit capteur de détection de contrainte (3)
**caractérisé en ce que**
ledit capteur de détection de contrainte (3) est installé et fixé dans ledit orifice (2) à l'aide d'un moyen d'espacement (4), le moyen d'espacement (4) étant un matériau qui remplit tout l'espace entre ledit capteur de détection de contrainte (3) et les parois dudit orifice (2).

2. Dispositif selon la revendication 1, dans lequel le matériau dudit moyen d'espacement (4) est le même matériau que la base du capteur (20) dudit capteur de détection de contrainte (3).

3. Dispositif selon le revendication 1 ou 2, dans lequel ledit orifice (2) est disposé par rapport à une ligne neutre de contrainte (10) dudit essieu (1) de manière à intégrer au moins une portion de ladite ligne neutre de contrainte (10).

4. Dispositif selon la revendication 1, 2 ou 3, dans lequel ledit capteur de détection de contrainte (3) est monté dans ledit orifice (2) de telle sorte qu'au moins deux desdites jauges de déformation (21, 22 ; 23, 24) reposent sur les côtés opposés de ladite ligne neutre de contrainte (10).

5. Dispositif selon l'une quelconque des revendications 1 à 4, dans lequel ledit orifice (2) est disposé perpendiculairement à ladite ligne neutre de contrainte (10) dudit essieu (1).

6. Dispositif selon l'une quelconque des revendications 1 à 4, dans lequel ledit capteur de détection de contrainte (3) comprend un cube en plastique (2) en tant que ladite base (20) et dans lequel les jauges de déformation (71, 72, 73 ; 74, 75, 76 ; 77, 78, 79) sont montées sur les trois surfaces du cube (2), chaque surface individuelle étant perpendiculaire aux deux autres.

7. Dispositif selon l'une quelconque des revendications 1 à 6, dans lequel le(s)dit(s) capteur(s) de détection de contrainte (3) et ledit circuit de traitement de signal (41, 44) sont installés et fixés par ledit moyen d'espacement (4) dans le même orifice (2) formé dans ledit essieu (1).

8. Dispositif selon la revendication 7, dans lequel ledit capteur de détection de contrainte (3) est une unité intégrale comprenant des jauges de déformation (21, 22, 23, 24, 31, 32, 33, 34) montées sur les surfaces d'une base en plastique cubique (20).

9. Dispositif selon la revendication 7, dans lequel ledit capteur de détection de contrainte (3) comprend des jauges de déformation (21, 22, 23, 24) montées sur un substrat en céramique et étant recouvertes d'un film d'oxyde.

10. Dispositif selon l'une quelconque des revendications 1, 2, 3, 4 ou 7, dans lequel ledit capteur de détection de contrainte (3) est une unité intégrale comprenant des jauges de déformation (21, 22, 23, 24) montées sur un élément proéminent (62) s'étendant depuis l'extrémité d'une structure en forme de barre (51).

11. Dispositif selon l'une quelconque des revendications 1 à 10, dans lequel lesdites jauges de déformation (21, 22, 23, 24) dudit capteur de détection de contrainte sont agencées dans ledit orifice (2) dans ledit essieu (1) selon une orientation d'environ 45 degrés par rapport à l'axe central de contrainte horizontale et à un axe central de contrainte verticale d'un véhicule.

12. Dispositif selon l'une quelconque des revendications 1 à 10, dans lequel un capteur de détection de contrainte auxiliaire (3) pour détecter un couple de freinage est installé près d'un capteur de détection de contrainte principal (3), et dans lequel des signaux de détection de contrainte correspondants sont traités dans ledit circuit de traitement de signal (41, 44) afin d'éliminer ou de réduire les signaux de déformation correspondant au couple de freinage.

13. Dispositif selon l'une quelconque des revendications 1 à 12, dans lequel ledit circuit de traitement de signal se compose des circuits en pont dudit capteur de détection de contrainte (3) et d'un circuit d'amplification (41, 44).

14. Dispositif selon la revendication 13, dans lequel ledit circuit de traitement de signal comprend un circuit opérationnel (47).
